# EUROPÄISCHE PATENTSCHRIFT

(11) **EP 2 582 452 B1**
(45) Veröffentlichungstag und Bekanntmachung des Hinweises auf die Patenterteilung: **13.05.2015**
(21) Anmeldenummer: 11727417.5
(22) Anmeldetag: 09.06.2011
(51) Int. Cl.: B01F 7/00, C02F 11/14

(54) **VORRICHTUNG UND VERFAHREN ZUM BEHANDELN VON SCHLÄMMEN**
APPARATUS AND METHOD FOR TREATING SLURRIES
DISPOSITIF ET PROCÉDÉ DE TRAITEMENT DE BOUES

(30) Priorität: 15.06.2010 DE 102010023793
(43) Veröffentlichungstag der Anmeldung: 24.04.2013
(73) Patentinhaber: J.F. Knauer Industrie-Elektronik Gmbh, 60437 Frankfurt (DE)
(72) Erfinder: KNAUER, Jochen, Friedrich, 61348 Bad Homburg (DE)
(74) Vertreter: Schröer, Gernot H.
(86) Internationale Anmeldenummer: PCT/EP2011/059620
(87) Internationale Veröffentlichungsnummer: WO 2011/157633

(56) Entgegenhaltungen:
- DE-A1-102005 019 010
- DE-C- 74 618
- JP-A- 2004 130 181

## Beschreibung

Die Erfindung betrifft eine Vorrichtung und ein Verfahren jeweils zum Behandeln von Schlämmen, insbesondere industrieller oder biogener Herkunft.

Solche Vorrichtungen und Verfahren finden zur Behandlung oder auch Sanierung von Schlämmen Verwendung, insbesondere von Schlämmen industrieller Herkunft, von Schlämmen aus dem Bergbau, von Sedimentschlämmen in Gewässern und/oder auch von biogenen Schlämmen.

Bei biogenen Schlämmen tierischen oder menschlichen Ursprungs handelt es sich üblicherweise um Gemische aus flüssiger Phase oder Flüssigkeit, meist hauptsächlich Wasser, und fester Phase oder Feststoffteilchen. Die feste Phase umfasst dabei in der Regel biogene Partikel oder organische Feststoffe, Zellen und Mikroorganismen, insbesondere Bakterien, und Aggregate daraus. Zusätzlich können biogene Schlämme organische oder anorganische Stoffe umfassen sowie eine Gasphase, z. B. in Form von Gasblasen oder gelöstem Gas. Das Gas kann aus aerobem oder anaerobem Abbau von organischem Material stammen. Biogene Schlämme der Abwasserreinigung werden auch als Klärschlämme bezeichnet.

Bei Kläranlangen kommt das zu reinigende Abwasser bzw. Schmutzwasser üblicherweise nach einer mechanischen Vorreinigung in ein Vorklärbecken, in dem sich ungelöste Stoffe wie Fäkalstoffe und Papier etc. absetzen oder an der Oberfläche aufschwimmen. Vorgeklärtes Schmutzwasser wird dann üblicherweise einer biologischen Klärstufe unterzogen. Dabei werden organische Stoffe, insbesondere aerob durch Mikroorganismen, abgebaut und anorganische Stoffe teilweise oxidiert. Übliche Verfahren für diese biologische Stufe sind Belebtschlammverfahren mit nachgeschalteter Nachklärung. Beim Belebtschlammverfahren werden biogene Inhaltsstoffe des Ab- bzw. Schmutzwassers durch Zugabe von Belebtschlamm, welcher z. B. geflockt aggregierte Bakterien enthält, unter Luftzufuhr biotisch oxidativ aerob kontinuierlich abgebaut. Bei der Nachklärung sedimentiert der Belebtschlamm und wird so aus dem Abwasser abgetrennt. Ein Teil des Schlamms kann als sog. Rücklaufschlamm ins Belebtschlammverfahren rückgeführt werden, um die Konzentration der Mikroorganismen ausreichend hoch zu halten. Der überschüssige Schlamm, der durch Biomassewachstum bei der Nachklärung entstanden ist, wird zur Weiterbehandlung zusammen mit dem Primärschlamm der Vorklärung eingedickt und dann z. B. in Faultürmen anaerob weiter abgebaut. Daraus resultierender Faulschlamm wird nach Durchlaufen eines Nacheindickers einer Schlammpresse zur Entwässerung zugeführt und kann nach Entwässern entsorgt werden. Klärverfahren können auch ohne Vorklärung durchgeführt werden. Dabei wird nur der Überschussschlamm aus der Nachklärung über einen Voreindicker, in der Regel ohne Faulturm, der Schlammpresse zugeführt.

Zum Entwässern von Schlämmen, insbesondere Klär- oder Industrieschlämmen oder Sedimentschlämmen, ist es bekannt, den im Wesentlichen aus Wasser bestehenden Flüssigkeitsanteil des Schlamms mit einer Filteranlage oder einer Zentrifuge abzuscheiden, wobei gleichzeitig feste Bestandteile aus dem Schlamm abgeschieden werden. Ferner sind auch Entwässerungen mit Säcken oder Schläuchen aus (geo)textilen Filtermaterialen bekannt.

Dem Schlamm wird nun üblicherweise vor der Entwässerung ein Flockmittel (Flockungshilfsmittel), das Polymere enthält, versetzt, um den Entwässerungsgrad oder den Trocknungsgrad des Schlammes zu erhöhen, also den Schlamm besser zu entwässern. Die Wirkungsweise des Flockmittels kann man sich so vorstellen, dass die Polymere die Feststoffteilchen im Schlamm in Flocken oder unter Flockenbildung aneinander binden und dadurch deren Trennung vom Wasser unterstützen oder verbessern. Die herausgefilterte entwässerte Trockenmasse wird auch als Filterkuchen bezeichnet. Die Polymere verbessern auch den Durchgang des Wassers durch den Filterkuchen bei den nachfolgenden Schlammmengen.

Aus der DE 198 08 156 A1 ist eine Vorrichtung zum Aufbereiten von Konditioniermittel (Flockmittel) für wässrigen Schlamm bekannt mit einem sich drehenden Verteilerkopf zur Vermischung einer Mischung aus Wirkstoff-Stammlösung und Zusatzwasser in einer Mischkammer und einer Impfeinrichtung, die die in der Mischkammer vermischte Wirkstofflösung als Konditioniermittel an den in einem Förderrohr fließenden wässrigen Schlamm abgibt. Der Verteilerkopf weist um seine Drehachse verteilt im Wesentlichen zwei parallel zur Drehachse verlaufende Längsschlitze als Fluid-Auslässe für die Mischung sowie zwei radial nach außen und längs der Drehachse sich erstreckende als Streifen ausgebildete Mischflügel auf. Die Längsschlitze sind in Umfangsrichtung zwischen den Mischflügeln angeordnet. Die Mischung strömt durch einen Schaft des Verteilerkopfes und durch die schlitzförmigen Fluid-Auslässe nach außen in die Mischkammer und wird dort von den beiden Mischflügeln durchmischt. Die Mischflügel haben an ihrem Außenumfang oder radial am Weitesten außen befindlichen Bereich in einer ersten Ausführungsform parallel zur Drehachse verlaufende Einmischkanten und axial vorne und hinten sich anschließende gekrümmt nach innen verlaufende Endkanten oder in einer zweiten Ausführungsform kreisförmige in einer die Drehachse enthaltenden Längsebene verlaufende Einmischkanten. Die Einmischkanten der Mischflügel verwirbeln und vermischen das über die Schlitze eingebrachte Flockmittel im Schlamm. Die Drehzahl des Verteilerkopfes wird in einem Bereich zwischen 700 U/min (Umdrehungen pro Minute) und 2.500 U/min eingestellt.

Die Wirksamkeit der biologischen Reinigungsstufe in Kläranlagen kann dadurch erhöht werden, dass man Homogenisatoren oder auch Desintegratoren zum Behandeln des Klärschlamms, insbesondere des Rücklaufschlamms, Primärschlamms oder Überschussschlamms und auch des Faulschlamms, einsetzt.

nen Feststoffpartikel verkleinert und homogenisiert werden, wodurch eine größere effektive Oberfläche für den Abbau zur Verfügung gestellt wird. Ferner können durch Desintegration an Zellwänden anhaftende Enzyme und biogene Partikel abgelöst und somit in die flüssige Phase eingebracht werden. Weiter können bei der Desintegration Zellwände von Zellen und dgl. zumindest teilweises aufgeschlossen werden, wodurch Endoenzyme der Zellen freigesetzt werden. Insbesondere die genannten Wirkungen der Desintegration erhöhen den Wirkungsgrad des biologischen Abbaus durch Mikroorganismen im Schlamm, insbesondere im Belebtschlamm der biologischen Abbaustufe.

Ein Desintegrationsrotor für Klärschlämme ist beispielsweise aus der DE 37 19 441 A1 bekannt. Der bekannte Desintegrationsrotor weist verwundene Flügel mit gebogener Front auf. Eine Rotation des Desintegrationsrotors im Schlamm führt zu desintegrierenden Kavitationseffekten.

Aus der JP-2002 248493 ist ein außenseitige Flügel aufweisender Desintegrationsrotor für Klärschlämme bekannt. Bei Rotation dieses Desintegrationsrotors wird eine Desintegration durch Kavitation zwischen den Flügeln hervorgerufen.

Die US 6,402,065 B1 offenbart einen Desintegrationsrotor mit parallel zur Rotationsachse angeordneten Flügeln, bei welchem der Schlamm radial fließt.

Aus der DE 20 2005 000 875 U1 ist ein Desintegrationsrotor bekannt, bei welchem der Schlamm durch teilweise düsenartige Hohlräume radial von innen nach außen geführt wird.

Die DE 74 618 C offenbart ein keilförmiges Treib- oder Transportmesser an Mischmaschinen für pulverförmiges und körniges Gut, welches außer der den Vorschub des Materials in der Richtung der Drehachse bewirkenden Fläche noch eine Gegenfläche besitzt, welche die entgegengesetzte Neigung zur Drehachse und daher das Bestreben hat, das Material rückläufig zu bewegen. Insbesondere sind die Transportmesser prismatisch mit einer dreieckigen Grundfläche ausgebildet.

Aus JP 2004/130181 A und dem zugehörigen Patent Abstract of Japan ist eine Vorrichtung gemäß dem Oberbegriff des Anspruchs 1 offenbart.

Zwar kann mit den bekannten Desintegrationsrotoren eine Desintegration von Schlämmen erreicht werden. Die erreichbare Desintegrationswirkung ist jedoch noch verbesserungswürdig.

Ausgehend davon ist es insbesondere eine Aufgabe der Erfindung, eine neue Vorrichtung sowie ein neues Verfahren jeweils zum Behandeln, insbesondere Einmischen von Konditioniermittel und/oder Desintegrieren, von Schlämmen bereitzustellen.

Diese Aufgabe wird gelöst durch die Merkmale des Patentanspruchs 1. Ausgestaltungen und Weiterbildungen gemäß der Erfindung ergeben sich aus den abhängigen Ansprüchen.

Die Vorrichtung gemäß Patentanspruch 1 ist zum Behandeln von Schlämmen, insbesondere biogenen oder industriellen Ursprungs, geeignet und bestimmt und umfasst zumindest einen im Schlamm angeordneten oder anordenbaren Behandlungsrotor, der um eine, im Allgemeinen durch, vorzugsweise zentral durch, den Behandlungsrotor verlaufende, Rotationsachse rotiert oder rotierbar ist und von der Rotationsachse gesehen nach außen vorspringende Behandlungselementen, zwischen denen Zwischenräume gebildet sind, wobei wenigstens ein Teil der Behandlungselemente an wenigstens einem, vorzugsweise jedem, angrenzenden Zwischenraum jeweils wenigstens eine Behandlungskante, vorzugsweise wenigstens zwei voneinander beabstandete Behandlungskanten, aufweisen, wobei jede dieser Behandlungskanten von der Rotationsachse gesehen von innen nach außen verläuft. Der Verlauf der Behandlungskanten ist insbesondere so, dass der Abstand der Punkte auf der Behandlungskante von der Rotationsachse entlang des Verlaufs oder der Erstreckung der Behandlungskante stetig, vorzugsweise streng monoton, zunimmt. Insbesondere ist der Verlauf der Behandlungskanten radial oder linear, kann aber auch gekrümmt oder auch linear und schräg zur radialen Richtung sein. Gemäß Patentanspruch 1 nimmt die in Richtung parallel zur Rotationsachse gemessene Breite wenigstens eines Teils der Behandlungselemente in Rotationsrichtung (oder: Umlaufrichtung, Umfangsrichtung) zunächst ab und dann erst wieder zu, vorzugsweise derart, dass die die Behandlungselemente eine konkav gekrümmte, vorzugsweise bikonkav gekrümmte, Gestalt haben. Zusätzlich nimmt die in Richtung parallel zur Rotationsachse gemessene Innenabmessung wenigstens eines Teils der Zwischenräume zwischen den Behandlungselementen in Rotationsrichtung zunächst zu und dann wieder ab, vorzugsweise derart, dass die Zwischenräume jeweils konvex gekrümmt, vorzugsweise bikonvex gekrümmt, ausgebildet sind. Die Variation der Breite oder Innenabmessung in Rotations- oder Umlaufrichtung ist bevorzugt kontinuierlich, schließt es aber beispielsweise nicht aus, dass die Breite oder Innenabmessung abschnittsweise konstant ist.

Durch diese Veränderung der Breite der Behandlungselemente bzw. der Innenabmessung der Zwischenräume kommt es an den Behandlungselementen oder in den Zwischenräumen zwischen benachbarten Behandlungselementen zu einer zusätzlichen Dekompression und anschließenden Kompression des Schlamm-Konditioniermittel-Gemisches oder des Schlammes. Einerseits wird aufgrund dieser Druck- und Strömungsverhältnisse die Strömungsführung des Schlamm-Konditioniermittel-Gemischs oder des Schlammes in den Zwischenräumen verbessert und dieses auch an einer zweiten in Rotationsrichtung hinter einer vorderen Behandlungskante gelegenen Behandlungskante am Zwischenraum verwirbelt und somit an wenigstens zwei Behandlungskanten nacheinander mit Mischenergie beaufschlagt. Aufgrund dieser erzwungenen Strömung durch den Zwischenraum infolge dessen Geometrie entsteht also ein zusätzlicher Behandlungseffekt mit weiter gesteigertem Mischenergieeintrag. Andererseits führt die Dekompression und anschließende Kompression des Schlamm-Konditioniermittel-Gemischs zu zusätzlichen Behandlungseffekten infolge der Druckunterschiede bis hin zu Kavitationseffekten. Die Eintrittsöffnung der Zwischenräume kann in dieser Ausführungsform in Gestalt und Größe gleich zur Austrittsöffnung gewählt sein, jedoch auch unterschiedlich sein.

Das Behandeln des Schlammes ist in einer vorteilhaften Ausführungsform ein Einmischen von Konditioniermittel, insbesondere Flockmittel, in den Schlamm, wobei der Behandlungsrotor dann als Einmischrotor ausgebildet ist und die Behandlungselemente des Behandlungsrotors als Einmischelemente ausgebildet sind und jede Behandlungskante als Einmischkante ausgebildet ist.

In einer weiteren vorteilhaften Ausführungsform ist das Behandeln des Schlammes eine Desintegration des Schlammes, wobei der Behandlungsrotor als Desintegrationsrotor ausgebildet ist und die Behandlungselemente des Behandlungsrotors als Desintegrationselemente ausgebildet sind und jede Behandlungskante als Desintegrationskante ausgebildet ist.

Die Ausführungsformen zum Einmischen von Konditioniermittel und zum Desintegrieren können auch miteinander kombiniert werden, insbesondere in zweistufigen Systemen oder Prozessen nacheinander.

Die Erfindung beruht auf der Überlegung, an einem Behandlungsrotor mehrere nach außen von der Rotationsachse des Behandlungsrotors weg oder quer zur Rotationsachse vorragende (oder: vorspringende) Behandlungselemente (oder: Behandlungszähne, Behandlungszapfen) vorzusehen, die durch Zwischenräume (oder: Spalte) voneinander getrennt oder beabstandet sind und die ferner zu dem anschließenden oder angrenzenden Zwischenraum oder den anschließenden oder angrenzenden Zwischenräumen hin jeweils wenigstens zwei nach außen in Richtung von der Rotationsachse weg verlaufende und voneinander beabstandete Behandlungskanten aufweisen.

Dieses Maßnahmenbündel gemäß der Erfindung verbessert in synergistischer Weise die Behandlungswirkung, insbesondere Einmischwirkung oder Desintegrationswirkung, des Behandlungsrotors und vergrößert die einbringbare Behandlungsenergie, insbesondere Mischenergie oder Zersetzungsenergie zum Desintegrieren von Bestandteilen des Schlammes, insbesondere Zellaggregaten oder Zellen.

Insbesondere wird durch die Mäandrierung oder Einführung beabstandeter Behandlungselemente die effektive Kantenlänge der (wirksamen) Behandlungskanten vergrößert, die als Verwirbelungskanten die Vermischung des Flockmittels im Schlamm oder die Desintegration des Schlammes erheblich vergrößern. Die Zwischenräume zwischen den Behandlungselementen führen das Schlamm-Konditioniermittel-Gemisch oder den Schlamm bei der Rotation des Rotors an den Behandlungskanten vorbei, so dass auch die Behandlungskanten praktisch über ihre volle Länge auf das Gemisch oder den Schlamm einwirken und Behandlungsenergie eintragen können. Außerdem kann die Drehzahl des Rotors aufgrund dessen höheren Wirkungsgrades reduziert und damit, im Allgemeinen elektrische, Antriebsenergie eingespart werden.

Bei einem Flockmittel als Konditioniermittel steht die eingebrachte Mischenergie in direkter Korrelation zur Bindungsenergie bei der Flockulation/Ausbildung der Flocken, so dass also auch die Flockulierung infolge der Maßnahmen gemäß der Erfindung verbessert werden kann.

Damit wird gemäß der Erfindung eine vollständig neue Generation von Mischvorrichtungen zum Einmischen von Konditioniermitteln, insbesondere Flockmitteln, in Schlämme geschaffen, die aufgrund der enormen Steigerungen im Wirkungsgrad und der damit erzielten Energieeinsparung die bisherigen Mischvorrichtungen technologisch ablösen wird. Die Erfindung stellt somit einen technologischen und wirtschaftlichen Quantensprung im Bereich der Flockulations- und Einmischtechnik dar. Vergleichbares lässt sich über die Anwendung zur Desintegration von Schlämmen sagen. Bei den Schlämmen kann es sich um beliebige Schlämme, insbesondere Klärschlämme oder Industrieschlämme, handeln.

In vorteilhaften Varianten gemäß der Erfindung weisen die Behandlungselemente oder alternativ oder zusätzlich die Zwischenräume zwischen den Behandlungselementen eine besondere Form hinsichtlich ihrer Querschnitte auf.

Das Verhältnis einer maximalen Breite zu einer minimalen Breite der Behandlungselemente ist bevorzugt größer 2, vorzugsweise zwischen 2 und 3,5, gewählt. Das Verhältnis einer maximalen Weite zu einer minimalen Weite der Zwischenräume ist bevorzugt größer 1,4, vorzugsweise zwischen 1,5 und 2,8, gewählt.

Bevorzugt wird das Konditioniermittel zwischen zwei in Rotationsrichtung aufeinander folgenden Behandlungselementen in den Schlamm eingebracht, insbesondere indem das Konditioniermittel durch zwischen den Behandlungselementen liegende Durchbrüche oder Öffnungen in dem Rotor von einem Rotorinnenraum nach außen zugeführt wird. Das Konditioniermittel kann aber auch alternativ oder zusätzlich in die Zwischenräume direkt durch zwischen den an den jeweiligen Zwischenraum vorgesehenen Behandlungselementen angeordnete Auslassöffnungen im Rotor eingebracht werden, die in die Zwischenräume direkt münden.

Besonders effektiv erweist sich der Behandlungsrotor, wenn dieser bei dessen Rotation um die Rotationsachse vollständig in den Schlamm eintaucht bzw. von diesem umgeben ist.
Die Behandlungskanten sind bevorzugt an oder in Randbereichen der Zwischenräume angeordnet, welche Eintrittsöffnungen oder Austrittsöffnungen der Zwischenräume für das Gemisch aus Schlamm und Konditioniermittel bilden. Da an diesen Randbereichen zusätzlich die Strömungsquerschnitte der Zwischenräume am kleinsten sind, ist die Strömungsgeschwindigkeit dort am größten und damit auch die Verwirbelung an den Behandlungskanten optimiert.

In einer besonders vorteilhaften Ausführungsform liegen zwei Behandlungskanten von zwei verschiedenen an denselben Zwischenraum angrenzenden Behandlungselementen einander gegenüber, wodurch das Gemisch zwischen den beiden praktisch gleichzeitig oder gemeinsam einwirkenden Einmischkanten besonders stark verwirbelt und mit Mischenergie beaufschlagt wird.

Bevorzugt sind zwei vordere Behandlungskanten an der Eintrittsöffnung des Zwischenraumes einander gegenüber liegend und zwei hintere Behandlungskanten an der Austrittsöffnung des Zwischenraumes einander gegenüber liegend angeordnet. Dadurch können jeweils zwei Behandlungskanten an den engsten Stellen unmittelbar von beiden Seiten oder gemeinsam auf das Gemisch einwirken und zwar zunächst bei dessen Eintritt in den Zwischenraum und dann bei dessen Austritt aus dem Zwischenraum.

Diese Maßnahmen führen zu einem weiter verbesserten Behandlungswirkungsgrad.

In einer besonderen konstruktiven Ausgestaltung sind wenigstens zwei Behandlungskanten eines Behandlungselementes durch eine Flachseite verbunden, insbesondere zwei Behandlungskanten durch eine erste Flachseite und zwei weitere Behandlungskanten durch eine weitere, vorzugsweise zur ersten Flachseite parallele zweite Flachseite. Ferner sind bevorzugt gegenüberliegende Behandlungskanten an den beiden Flachseiten über konkav gekrümmte Seitenwände miteinander verbunden, die seitliche Begrenzungswände der Zwischenräume bilden. Die Seitenwände sind vorzugsweise spiegelsymmetrisch bezüglich wenigstens einer Symmetrieebene ausgebildet, vorzugsweise bezüglich einer in der Mitte zwischen den beiden Flachseiten liegenden und zu diesen parallelen Symmetrieebene und/oder bezüglich einer in der Mitte zwischen zwei Behandlungskanten und zu den Flachseiten orthogonalen Symmetrieebene.

Ferner kann eine die Endpunkte der Behandlungskanten verbindende (radial außen liegende) Außenfläche des Behandlungselements als Flachseite ausgebildet sein und/oder eine innere (radial innen liegende) Begrenzungswand des Zwischenraumes als Flachseite ausgebildet sein. Die Länge der Behandlungselemente oder der Behandlungskanten ist im Allgemeinen größer als die lichte Weite der Zwischenräume, insbesondere vorzugsweise wenigstens um das 1,5-fache bis 3-fache.

Im Allgemeinen weist der Behandlungsrotor einen Rotorgrundkörper auf, an dem die Behandlungselemente befestigt oder angeformt sind. Der Rotorgrundkörper ist bevorzugt innen hohl mit einem Innenraum, der von einer, vorzugsweise im Wesentlichen hohlzylindrischen, Wandung umschlossen ist.

Vorzugsweise ist wenigstens ein Durchbruch in der Wandung vorgesehen, über den der Innenraum des Rotorgrundkörpers mit dem Außenraum in Strömungsverbindung steht, so dass in dem oder durch den Innenraum strömendes Konditioniermittel durch den wenigstens einen Durchbruch in den im Außenraum befindlichen Schlamm einbringbar ist oder eingebracht werden kann. Wenigstens ein Durchbruch kann als im Wesentlichen parallel zur Rotationsachse verlaufender axialer Schlitz ausgebildet sein.

Es ist besonders vorteilhaft, wenn der oder die Durchbrüche in Rotationsrichtung gesehen zwischen Behandlungselementen angeordnet und/oder zwischen jeweils zwei Behandlungselementen ist in Rotationsrichtung gesehen jeweils wenigstens ein Durchbruch angeordnet. Die Durchbrüche sind vorzugsweise zueinander in Rotationsrichtung versetzt, vorzugsweise äquidistant verteilt, angeordnet, insbesondere paarweise zueinander um etwa 180° versetzt und/oder zu den, vorzugsweise um 180° versetzten Behandlungselementen jeweils um etwa 90° versetzt.

Der Behandlungsrotor weist im Allgemeinen ein sich an den Rotorgrundkörper axial zur Rotationsachse anschließendes Kopplungselement auf, über welches der Behandlungsrotor mit einem, vorzugsweise drehzahlgeregelten oder drehzahlregelbaren, Rotationsantrieb, insbesondere einer Drehwelle des Rotationsantriebs, gekoppelt werden kann zum Rotieren des Behandlungsrotors um die Rotationsachse.

Gemäß einer vorteilhaften Ausgestaltung sind mehrere Behandlungselemente des Behandlungsrotors in Richtung parallel zur Rotationsachse versetzt angeordnet, insbesondere in wenigstens einer Reihe, vorzugsweise in zumindest zwei Reihen, wobei vorzugsweise die oder jede Reihe parallel zur Rotationsachse oder auch helikal um die Rotationsachse verläuft. Ferner sind bevorzugt wenigstens zwei Behandlungselemente auf einem Kreis um die Rotationsachse oder bei der gleichen axialen Position entlang der Rotationsachse angeordnet und zueinander um einen Abstandwinkel versetzt, wobei vorzugsweise diese wenigstens zwei Behandlungselemente in paarweise rotationssymmetrischer Anordnung oder unter gleichen Abstandswinkeln zueinander angeordnet sind und/oder wobei die Reihen von mehreren Behandlungselementen unter gleichen Abstandswinkeln zueinander oder unter einer drehzähligen Symmetrie angeordnet sind,

Weiterhin sind im Allgemeinen wenigstens ein Teil der, vorzugsweise alle, Behandlungselemente an der von der Rotationsachse abgewandten Außenseite voneinander beabstandet und/oder die Zwischenräume zwischen diesen Behandlungselementen an ihrer von der Rotationsachse abgewandten Außenseite nach außen offen ausgebildet. Bei einer solchen Ausführung sind die Zwischenräume leichter von Verstopfungen frei zu halten, ohne dass wesentliche Abstriche bei dem Wirkungsgrad hinzunehmen sind.

Alternativ können aber auch wenigstens ein Teil der Behandlungselemente, insbesondere die Behandlungselemente in jeweils einer Reihe oder einer Linie, an der von der Rotationsachse abgewandten Außenseite miteinander durch einen Außenbereich des Behandlungsrotors verbunden sein und/oder die Zwischenräume zwischen diesen Behandlungselementen an ihrer von der Rotationsachse abgewandten Außenseite abgeschlossen sind.

Zur Vermeidung von Unwuchten bei dem Behandlungsrotor ist es vorteilhaft, wenn der Behandlungsrotor, insbesondere seine Behandlungselemente, derart angeordnet und ausgebildet sind, dass der Massenschwerpunkt des Rotors auf der Rotationsachse liegt oder die Rotationsachse eine Hauptträgheitsachse (Eigenachse) des Rotors ist. Beispielsweise können auf gegenüberliegenden Seiten bzw. Linien des Behandlungsrotors jeweils gleich viele Behandlungselemente angeordnet sein. Das schließt mit ein, dass die Behandlungselemente in paarweise rotations-, spiegel- oder punktsymmetrischer Anordnung angeordnet sind.

Eine weitere Ausführungsform der Erfindung betrifft eine Vorrichtung zum Behandeln von Schlamm, insbesondere biogenem Schlamm, die zumindest eine Behandlungsvorrichtung gemäß der Erfindung umfasst und zumindest eine in Strömungsrichtung des Schlamms nachgeordnete oder nachgeschaltete Flüssigkeitsentzugseinrichtung, insbesondere Entwässerungseinrichtung, insbesondere Filterpresse oder Zentrifuge oder textile Entwässerungsschläuche oder -säcke, zum Reduzieren des Flüssigkeitsgehalts, insbesondere Wassergehaltes, des Schlammes umfasst.

Die Rotationsachse des Behandlungsrotors ist bevorzugt quer, vorzugsweise senkrecht, zur Transportrichtung des Schlamms, der insbesondere durch eine Transportleitung geführt wird, gerichtet.

Ein weiterer Aspekt der Erfindung betrifft ein Verfahren zum Einmischen von Konditioniermittel, insbesondere Flockmittel, in einen Schlamm, wobei eine Vorrichtung nach einem der vorhergehenden Ansprüche verwendet wird und der Behandlungsrotor im Wesentlichen vollständig, zumindest jedoch mit seinen Behandlungselementen, mit dem Schlamm umgeben wird oder im Schlamm angeordnet oder eingetaucht wird.

Das dem Schlamm zugesetzte Konditioniermittel, insbesondere Flockmittel, fördert oder verstärkt vorzugsweise die Trennung der Flüssigphase oder Flüssigkeit, insbesondere Wasser, von Feststoffen, einschließlich Festanteilen von im Schlamm enthaltenen Zellen organischen Ursprungs, des Schlammes. Es werden insbesondere aus Feststoffteilchen und/oder festen Zellbestandteilen des Schlammes und Flockmittel Flockengebilde verschiedener Größe gebildet und Flüssigkeit, insbesondere Wasser, des Schlammes freigesetzt.

Ein weiterer Aspekt der Erfindung betrifft ein Verfahren zur Desintegration von Schlämmen wobei eine Vorrichtung gemäß der Erfindung verwendet wird und der Behandlungsrotor im Wesentlichen vollständig, zumindest jedoch mit seinen Behandlungselementen, mit dem Schlamm umgeben wird oder im Schlamm angeordnet oder eingetaucht wird und um seine Rotationsachse rotiert wird

Nachfolgend werden Ausführungsbeispiele der Erfindung anhand von Figuren näher beschrieben. Es zeigen:
- FIG 1: in perspektivischer Darstellung einen Behandlungsrotor,
- FIG 2: einen Querschnitt des Behandlungsrotors der FIG 1 entlang einer senkrecht zur Rotationsachse gerichteten Schnittebene,
- FIG 3: zwei Behandlungselemente mit Zwischenraum in einem Längsschnitt,
- FIG 4: eine Seitenansicht des Behandlungsrotors nach FIG 1,
- FIG 5: eine Draufsicht auf den Behandlungsrotor nach FIG 1,
- FIG 6: eine weitere Ausführungsform eines Behandlungsrotors in einer Seitenansicht,
- FIG 7: eine perspektivische Ansicht einer Vorrichtung zum Einmischen von Konditioniermittel, insbesondere Flockmittel, in einen Schlamm und
- FIG 8: eine Seitenansicht der Vorrichtung nach FIG 7.

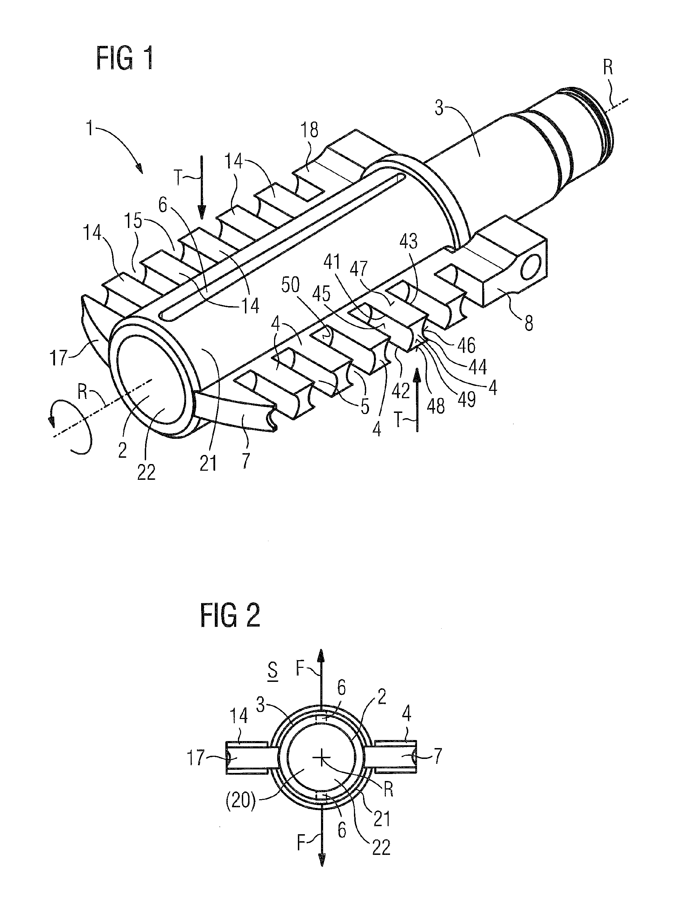

In den FIG 1 bis 8 sind gleiche oder funktionsgleiche Elemente mit gleichen Bezugszeichen bezeichnet. Die im Zusammenhang mit den Figuren (FIG) beschriebenen Ausgestaltungen werden nur insoweit beschrieben, als zum Verständnis der Erfindung erforderlich ist. Ferner sind die Figuren nicht zwingend maßstabsgetreu und Maßstäbe zwischen den Figuren können variieren.

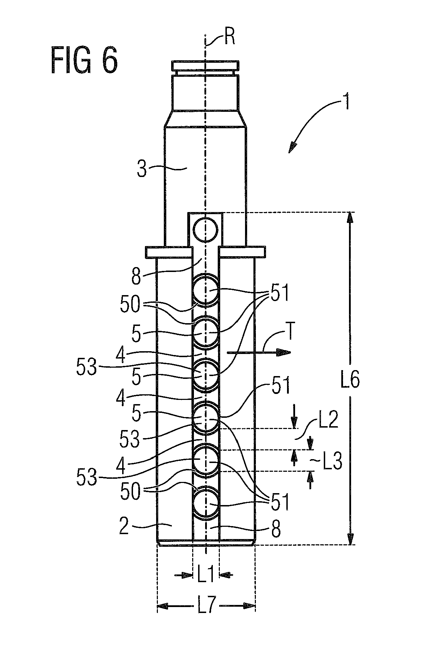

Die FIG 1 bis 5 zeigen ein erstes Ausführungsbeispiel eines Behandlungsrotors 1 und Teilen davon, FIG 6 ein zweites Ausführungsbeispiel eines Behandlungsrotors.

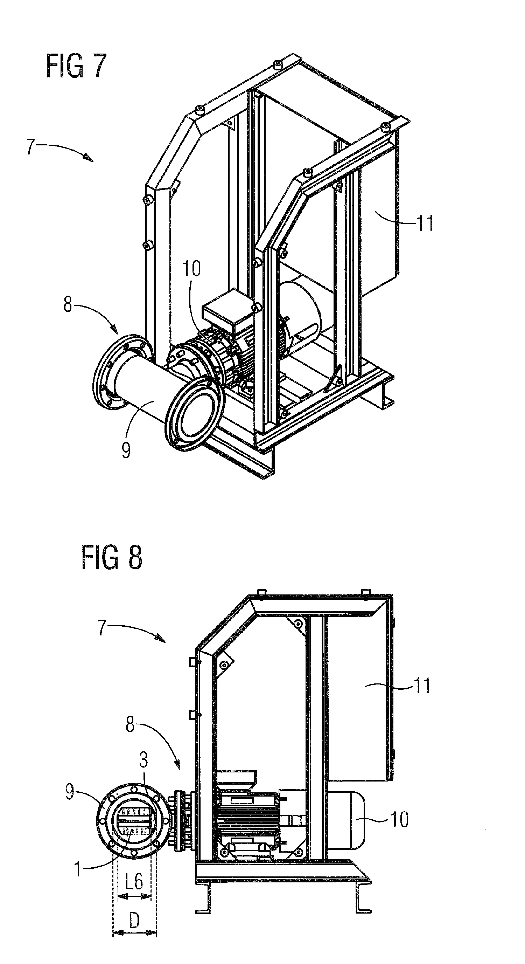

Die FIG 7 und 8 zeigen eine Vorrichtung 7 zum Behandeln von Schlamm S, insbesondere biogenem Schlamm, (oder ggf. auch einem Gemisch aus Schlamm S und Flockmittel F), insbesondere zum Einmischen von Flockmittel F oder zum Desintegrieren von Schlamm S. Der Behandlungsrotor 1 in einem T-förmigen Abschnitt einer lediglich abschnittweise dargestellten Transport- bzw. Speiseleitung 9 für den Schlamm S rotierbar gelagert ist. Der Behandlungsrotor 1 ragt in das Innere der Speiseleitung 9.

Der Behandlungsrotor 1 weist einen innen hohlen Rotorgrundkörper 2 mit einem Innenraum 20, der von einer im Wesentlichen hohlzylindrischen Wandung 21 umschlossen ist, und mehrere am Rotorgrundkörper 2 befestigte oder angeformte und nach außen, insbesondere in zur Rotationsachse R radialer Richtung, vorspringende oder vorragende Behandlungselemente 4 und 14 auf.

Der Behandlungsrotor 1 ist um eine zentral durch den Behandlungsrotor 1 verlaufende Rotationsachse R rotierbar und weist dazu ein sich an den Rotorgrundkörper 2 axial zur Rotationsachse R anschließendes Kopplungselement (Anschlusswelle) 3 auf, über welches der Behandlungsrotor 1 mit einem in FIG 1 nicht dargestellten Rotationsantrieb (10 in FIG 6 und 7) verbunden bzw. gekoppelt werden kann zum Rotieren des Behandlungsrotors 1 um die Rotationsachse R. Die Rotationsrichtung der Rotationsbewegung des Behandlungsrotors 1 ist mit T bezeichnet und ist im Allgemeinen eine an einen Kreis um die Rotationsachse R tangentiale Richtung oder eine entlang eines Kreises um die Rotationsachse R verlaufende und der Kreiskrümmung fortlaufende folgende Richtung. Im Beispiel der FIG 1 ist die Rotationsrichtung T im Uhrzeigersinn gewählt, kann aber auch entgegengesetzt oder entgegen zum Uhrzeigersinn gerichtet sein oder zur Vermeidung eines Zusetzens des Behandlungsrotors 1 auch regelmäßig gewechselt werden.

Die Behandlungselemente 4 und 14 sind insbesondere als Behandlungszapfen oder Behandlungszähne ausgebildet. Im dargestellten Ausführungsbeispiel weist der Behandlungsrotor 1 an gegenüberliegenden Seiten um etwa 180° versetzt zwei parallel zur Rotationsachse R verlaufende geradlinige Reihen von im Wesentlichen zueinander gleich ausgestalteten, jeweils beispielsweise fünf, Behandlungselementen 4 auf einer Seite und 14 auf der anderen Seite auf.

Zum Einmischen von Konditioniermittel, insbesondere Flockmittel F, in einen Schlamm S ist der Behandlungsrotor 1 als Einmischrotor und sind seine Behandlungselemente als Einmischelemente sowie deren Behandlungskanten als Einmischkanten ausgebildet. Eine solche Anwendung ist hier bevorzugt beschrieben.

Zur Desintegration eines Schlammes S (oder ggf. eines Gemisches aus Schlamm S und Flockmittel F) ist der Behandlungsrotor 1 als Desintegrationsrotor und sind seine Behandlungselemente als Desintegrationselemente sowie deren Behandlungskanten als Desintegrationskanten ausgebildet.

Zwischen den Behandlungselementen 4 einerseits und den Behandlungselementen 14 andererseits sind in Umfangsrichtung oder Rotationsrichtung T gesehen jeweils Durchbrüche 6 in der Wandung 21 vorgesehen, die wie in FIG 1, 2 und 5 zu sehen, als parallel zur Rotationsachse R verlaufende axiale Schlitze ausgebildet sind, aber auch anders gestaltet oder angeordnet sein oder in ihrer Zahl variiert werden können. Die Durchbrüche 6 sind ebenfalls zueinander um etwa 180° versetzt und zu den Behandlungselementen 4 und 14 jeweils um etwa 90°. Durch die Durchbrüche 6 ist der Innenraum 20 des Rotorgrundkörpers 2 mit dem Außenraum in Strömungsverbindung.

In FIG 6 sind zusätzliche Auslassöffnungen 55 in den Begrenzungswänden 50 axial gesehen zwischen den Behandlungselementen 4 und 14 vorgesehen, die direkt in die Zwischenräume 5 und 15 münden und ebenfalls den Innenraum 20 des Rotorgrundkörpers 2 mit dem Außenraum verbinden. Die Behandlungselemente 4 sind durch Zwischenräume 5 und die Behandlungselemente 14 durch Zwischenräume 15 voneinander beabstandet oder getrennt. Es können aber auch mehr als zwei solcher Reihen beabstandeter Behandlungselemente vorgesehen sein.

Die Behandlungselemente 4 und 14 ragen alle im Wesentlichen radial zur Rotationsachse R nach außen und haben jeweils vier vorzugsweise geradlinige Behandlungskanten 41, 42, 43 und 44, die parallel zu einer zur Rotationsachse R senkrechten, radialen Richtung, im Wesentlichen senkrecht zur Rotationsrichtung T sowie parallel zueinander nach außen verlaufen sowie im Wesentlichen die gleiche Länge L4 aufweisen.

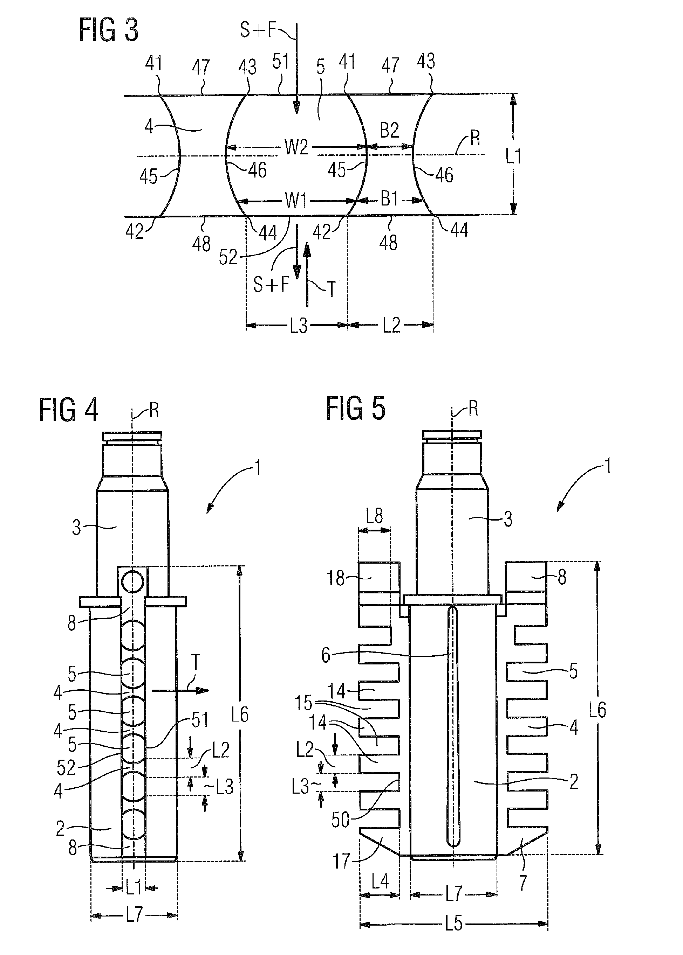

Jeweils zwei Behandlungskanten 41 und 42 eines Behandlungselements 4 und 43 und 44 eines benachbarten Behandlungselementes grenzen, wie in FIG 3 am Besten zu erkennen, an den dazwischen liegenden Zwischenraum 5 an und vorzugsweise liegen zwei gegenüber liegende Behandlungskanten 41 und 43 der benachbarten Behandlungselemente 4 der benachbarten Behandlungselemente 4 an einer Eintrittsöffnung 51 des Zwischenraumes 5 und zwei gegenüber liegende Behandlungskanten 42 und 44 der benachbarten Behandlungselemente 4 an einer Austrittsöffnung 52 des Zwischenraumes 5. Somit sind die zwei an den Zwischenraum 5 angrenzenden Behandlungskanten 41 und 42 eines Behandlungselementes 4 zueinander und ebenso die Behandlungskanten 43 und 44 des anderen Behandlungselementes 4 zueinander um den Abstand zwischen Eintrittsöffnung 51 und Austrittsöffnung 52 oder die in Rotationsrichtung T gemessene Abmessung L1 des Zwischenraumes 5 beabstandet. Entsprechendes gilt auch für die Behandlungselemente 14 und die Zwischenräume 15.

Die Eintrittsöffnung 51 und die Austrittsöffnung 52 können wie dargestellt gleich groß oder einen gleich große (Strömungs-)querschnittsfläche, vorzugsweise auch die gleiche Gestalt aufweisen, können aber auch unterschiedlich sein.

Die beiden Behandlungskanten 41 und 43 sind durch eine Flachseite 47 des Behandlungselements 4 bzw. 14 verbunden, während zwischen den Behandlungskanten 42 und 44 eine weitere, zur Flachseite 47 parallele Flachseite 48 des Behandlungselements 4 bzw. 14 liegt.

Die gegenüberliegenden Behandlungskanten 41 und 42 sowie 43 und 44 an den beiden Flachseiten 47 und 48 sind dagegen über konkav, also nach innen, gekrümmte Seitenwände 45 bzw. 46 miteinander verbunden, die somit auch die seitlichen Begrenzungswände der Zwischenräume 5 bzw. 15 bilden, die aus Sicht der Zwischenräume 5 bzw. 15 also konvex, d.h. nach außen, gekrümmt sind. Die Gestalt der Seitenwände 45 und 46 ist jeweils insbesondere spiegelsymmetrisch bezüglich einer in der Mitte zwischen den beiden Flachseiten 47 und 48 liegenden und zu diesen parallelen Symmetrieebene, beispielsweise zylindrisch. Ferner sind vorzugsweise die beiden Seitenwände 45 und 46 auch zueinander spiegelsymmetrisch bezüglich einer in der Mitte zwischen den beiden Behandlungskanten 41 und 43 und zu den Flachseiten 47 und 48 orthogonalen Symmetrieebene.

Damit nimmt, in allgemeinerer Betrachtung, die parallel zur Rotationsachse R oder senkrecht zur Rotationsrichtung T gemessene axiale Breite der Behandlungselemente 4 und 14 von einer maximalen Breite L2 vorne an der Flachseite 47 zunächst nach innen bis zur Mitte des Behandlungselements 4 bzw. 14 auf eine minimale Breite ab und dann wieder bis zu einer maximalen Breite L2 hinten an der Flachseite 48 zu. Komplementär dazu nimmt die parallel zur Rotationsachse R oder in Rotationsrichtung T gemessene axiale Breite der Zwischenräume 5 und 15 von einer minimalen Breite L3 vorne zunächst nach innen bis zur Mitte des Zwischenraumes 5 bzw. 15 auf eine maximale Breite zu und dann wieder nach hinten bis zu einer minimalen Breite L3 außen ab. Dies ist besonders gut in FIG 3 zu erkennen, wo beispielhaft eine größere Breite B1 des Behandlungselements 4 mit einer zugehörigen kleinere Weite W1 des Zwischenraums 5 und eine kleinere Breite B2 des Behandlungselements 4 weiter innen mit einer zugehörigen größere Weite W2 des Zwischenraums 5 dargestellt sind. Diese (allgemeinere) Lehre für die Ausgestaltung der Behandlungselemente bzw. Zwischenräume ist auch durch andere Ausführungen außer den in FIG 1 bis 5 dargestellten zu verwirklichen, beispielsweise durch eine andere Gestaltung ihrer Querschnitte mit anders gekrümmten und/oder auch asymmetrischen Seitenwänden 45 und 46 und anderen axialen Breiten bzw. Weiten. Beispielsweise kann auch nur eine Seitenwand 45 oder 46 konkav sein und die andere eben oder sogar konvex.

Die die Endpunkte der Behandlungskanten 41 bis 44 verbindende Außenfläche der Behandlungselemente 4 bzw. 14 ist mit 49 bezeichnet und vorzugsweise als Flachseite ausgebildet. Die inneren Begrenzungswände der Zwischenräume 5 und 15 sind mit 50 bezeichnet und vorzugsweise ebenfalls flach ausgebildet.

An der Stirnseite vor der Reihe der Behandlungselemente 4 oder 14 sind jeweils weitere nach außen ragende und zueinander gleich gestaltete Behandlungselemente 7 bzw. 17 unter Abstand zum benachbarten ersten Behandlungselement 4 bzw. 14 angeordnet, die jedoch an der Stirnfläche nach hinten gekrümmt sind, um den Behandlungsrotor 1 besser quer in einen Rohrquerschnitt eines Strömungsrohres für den Schlamm S einpassen zu können. Durch die vorne abgeschrägte oder gekrümmte Formgebung kann der Behandlungsrotor 1 an die gekrümmten Innenwände der rohrförmigen Transport- bzw. Speiseleitung 9 angepasst werden und quer zur Längsrichtung der Speiseleitung 9, d. h. der Transportrichtung des Schlamms S, möglichst weit in die Speiseleitung eingeführt werden, ohne dass die Behandlungselemente bei Rotation des Behandlungsrotors 1 an den Innenwänden anschlagen, bzw. diese berühren.

Weitere, zu diesem Zweck geeignete Formgebungen sind für die Behandlungselemente bzw. den Behandlungsrotor 1 auch denkbar. Beispielsweise kann auch die radiale Länge L4 der Behandlungselemente 4 und 14 entsprechend der jeweiligen Form der Speiseleitung variieren. Ferner ist es nicht zwingend, dass, wie beim vorliegenden Ausführungsbeispiel, die Behandlungselemente 4 und 14 im Wesentlichen die gleiche Form aufweisen.

An den hinteren Enden der beiden Reihen von Behandlungselementen 4 und 14 ist jeweils ein unter Abstand zum benachbarten letzten Behandlungselement 4 bzw. 14 Befestigungselement 8 bzw. 18 zum Befestigen des Behandlungsrotors 1 an einem mitrotierenden Teil einer nicht dargestellten Gleitringdichtung.

Die Tiefe der Zwischenräume 5 und 15 entspricht der Länge L4 der Behandlungskanten 41 bis 44. Der Zwischenraum zwischen Befestigungselement 8 oder 18 und Behandlungselement 4 bzw. 14 ist aus Stabilitätsgründen weniger tief mit der Tiefe L8.

Die Behandlungselemente 4 und 14 sowie 7 und 17 liegen bevorzugt paarweise an den gleichen axialen Positionen entlang der Rotationsachse R, ebenso die Befestigungselemente 8 und 18. Dies wird insbesondere in einer Ausführungsform erreicht, in der der Behandlungsrotor 1 eine Symmetrie bezüglich einer Drehung um 180° aufweist. Bei einer Ausführungsform mit drei oder vier oder allgemein n Reihen von Behandlungselementen statt nur zwei ist diese drehzählige Symmetrie dann bezüglich 120° bzw. 90° bzw. allgemein 360°/n auszubilden.

Die Gesamtlänge der beiden seitlichen Reihen aus Behandlungselementen 17 und 4 oder 7 und 14 einerseits und Befestigungselement 8 oder 18 ist mit L6 bezeichnet. Der Außendurchmesser des Behandlungsrotors 1 zwischen von den Außenseiten der beiden Reihen, entsprechend den Außenflächen 49 der Behandlungselemente 4 und 14, ist mit L5 bezeichnet. Mit L7 ist der Durchmesser des Grundkörpers 2, also seine (maximale) Abmessung senkrecht zur Rotationsachse R bezeichnet.

Die Abmessungen L1 bis L7 können ohne Beschränkung der Allgemeinheit wie folgt gewählt werden: L1 zwischen 6 mm und 28 mm, L2 zwischen 3 mm und 17 mm, L3 zwischen 2 mm und 14 mm, L4 zwischen 12 mm und 220 mm, L5 zwischen 80 mm und 510 mm, L6 zwischen 88 mm und 530 mm und L7 zwischen 21 mm und 270 mm.

Die Funktionsweise des Behandlungsrotors 1 kann man wie folgt beschreiben:

Während der Rotation des Behandlungsrotors 1 wird, zum Einmischen von Flockmittel F in einen Schlamm S, ein durch den Innenraum 20 geführtes oder strömendes Flockmittel F, wie am Besten in FIG 2 zu erkennen, durch die Durchbrüche 6 im Wesentlichen radial von der Rotationsachse R weg nach außen in den im Außenraum befindlichen Schlamm S eingebracht. Die Mischung oder das Gemisch aus Schlamm S und Flockmittel F ist mit S+F bezeichnet.

Das Flockmittel F dient in an sich bekannter und vorne schon beschriebener Weise zur Konditionierung des Schlammes S, insbesondere zur Verbesserung des Wirkungsgrades bei einem anschließenden mechanischen Flüssigkeitsentzug, insbesondere Entwässerung, insbesondere mittels einer Presse oder Zentrifuge oder eines wasserdurchlässigen Textilsackes oder dergleichen.

Das über die Durchbrüche 6 in den Schlamm S eingebrachte Flockmittel F wird dann von dem jeweils nächsten und ggf. folgenden Behandlungselement(en) 4 oder 14 unter Behandlungsenergieeintrag weiter und mit besserem Behandlungsgrad in den Schlamm S eingemischt.

Dabei wird beim Rotieren des Behandlungsrotors 1 im Schlamm S das Schlamm-Flockmittel-Gemisch S+F in einer entgegengesetzt zur Rotationsrichtung T gerichteten Strömungsrichtung durch die Zwischenräume 5 zwischen den Behandlungselementen 4 (bzw. Zwischenräume 15 zwischen den Behandlungselementen 14) gepresst oder geführt, wie gut in FIG 3 zu sehen. Das Gemisch S+F tritt durch die Eintrittsöffnung 51, die zwischen den in Rotationsrichtung T vorderen Behandlungskanten 41 und 43 der benachbarten Behandlungselemente 4 liegt, in den Zwischenraum 5 ein und strömt dabei an diesen vorderen Behandlungskanten 41 und 43 vorbei. Die vorderen Behandlungskanten 41 und 43 arbeiten oder wirken als Verwirbelungs- und Abreißkanten für die Strömung des Schlamm-Flockmittel-Gemischs S+F. Das Gemisch wird nun aber nicht aufgrund der Zentrifugalkräfte nach außen gepresst oder geschleudert, sondern verbleibt bei dem Behandlungsrotor 1 gemäß der Erfindung erzwungenermaßen zunächst noch an dem Behandlungsrotor 1.

Das Gemisch S+F aus Schlamm S und Flockmittel F wird nämlich durch den Zwischenraum 5 gepresst oder geführt und strömt erst bei der Austrittsöffnung 52 wieder aus dem Zwischenraum 5 heraus. Dadurch strömt das Gemisch S+F auch in erzwungener Strömung auch an dem zweiten Paar von gegenüber liegenden Behandlungskanten 42 und 44 an der Austrittsöffnung 52 vorbei und wird von diesen erneut mit Mischenergie beaufschlagt und verwirbelt.

Gegenüber dem Stand der Technik wird also die Zahl der wirksamen oder auf dasselbe Volumenteil des Schlamm-Flockmittel-Gemischs S+F einwirkenden Behandlungskanten gemäß einem ersten Effekt der Erfindung um vier erhöht, nämlich die vier an den Zwischenraum 5 (bzw. 15) angrenzenden Behandlungskanten 41 bis 44 der benachbarten Behandlungselemente 4 (bzw. 14).

Gegenüber einem Behandlungsrotor mit außen axial durchgehender Behandlungskante gewinnt man eine wirksame Kantenlänge der Behandlungskanten oder Verwirbelungskanten von 4 L4 pro Zwischenraum 5 oder 15 und 4 L8 bei den letzten beiden Zwischenräumen. Bei dem dargestellten Behandlungsrotor 1 wäre also die Gesamtkantenlänge 40 L4 + 8 L8. Beispielsweise mit L4 = 20 mm und L8 = 16 mm gewinnt man also eine Verwirbelungskantenlänge von 928 mm.

Diese vergrößerte Behandlungskantenzahl oder -länge gemäß der Erfindung hat eine erhebliche Verbesserung des Behandlungsergebnisses oder des Mischenergieeintrages zur Folge.

Ein zweiter Effekt, der ein verbessertes Behandlungsergebnis zeitigt, resultiert aus der Veränderung des Strömungsquerschnitts im Zwischenraum 5 (oder 15) für das durchströmende Gemisch S+F. Das Gemisch S+F wird aufgrund des in Strömungsrichtung zunächst zunehmenden Querschnitts des Zwischenraumes 5 (oder 15) zuerst dekomprimiert, also der statische Druck reduziert aufgrund des höheren dynamischen Drucks, und anschließend aufgrund des im Anschluss wieder abnehmenden Querschnitts des Zwischenraumes 5 (oder 15) komprimiert. Wenn die Eintrittsöffnung 51 und die Austrittsöffnung 52 im Wesentlichen den gleichen Strömungsquerschnitt aufweisen, so sind auch die statischen Drücke beim Eintritt und beim Austritt des Gemisches S+F in den bzw. aus dem Zwischenraum 5 (oder 15) im Wesentlichen gleich.

Durch diese Dekomprimierung und anschließende Komprimierung des Schlamm-Flockmittel-Gemisches S+F treten gegenüber herkömmlichen Behandlungsrotoren zusätzliche Einmischeffekte auf, die zu einer verbesserten Einmischung des Flockmittels F in den Schlamm S führen.

Einerseits wird zunächst in Verbindung mit dem ersten Effekt durch den Druckverlauf innerhalb der Zwischenräume 5 (15) das Gemisch S+F in die Zwischenräume 5 (15) regelrecht eingesaugt und weicht nicht bereits vor den hinteren Behandlungskanten 42 und 44 bereits nach außen aus, sondern überströmt auch die hinteren Behandlungskanten 42 und 44 beim Austritt aus den Zwischenräumen 5 (15) fast vollständig. Dasselbe Volumenelement des Schlamm-Flockmittel-Gemisches S+F wird also sowohl an den vorderen Behandlungskanten 41 und 43 als auch an den hinteren Behandlungskanten 42 und 44 vorbeigeführt und weiter verwirbelt und vermischt.

Der genannte zweite Effekt wird jedoch durch die Druckunterschiede, die sogar ab einer gewissen Größe wie in einer Kavitationsdüse Kavitationseffekte bewirken können, selbst verursacht, die die Vermischung des Gemischs S+F auch während des Strömens innerhalb des Zwischenraumes 5 (15) zwischen den Behandlungskanten verbessern.

Schließlich ist es auch in einer nicht dargestellten Ausführungsform möglich, dass in Rotationsrichtung T die axiale Breite der Behandlungselemente 4 und 14 von einer minimalen Breite B2 vorne an der Flachseite 47 bis zu einer maximalen Breite B1 hinten an der Flachseite 48 zunimmt und entsprechend in Rotationsrichtung T die axiale Weite der Zwischenräume 5 und 15 von einer maximalen Weite W2 vorne bis zu einer minimalen Weite W1 hinten abnimmt. Die Eintrittsöffnung 51 der Zwischenräume 5 und 15 ist in dieser Ausführungsform also immer größer als die Austrittsöffnung 52 der Zwischenräume 5 und 15. Somit wird in dieser Ausführungsform das Schlamm-Flockmittel-Gemisch S+F auf seinem Weg durch die Zwischenräume zwischen den Behandlungselementen nur komprimiert und nicht erst dekomprimiert. Auch in dieser Ausführungsform werden gute Durchmischungsergebnisse erzielt. Insbesondere in dieser, aber auch in allen anderen Ausführungsformen können auch nur an der Austrittsöffnung 52 Behandlungskanten vorgesehen sein, während an der Eintrittsöffnung auch stumpfe oder gekrümmte und/oder trichterförmige Einlaufbereiche vorgesehen sein können.

Das Verhältnis B1/B2 der maximalen axialen Breite B1 zur minimalen Breite B2 der Behandlungselemente 4 und 14 ist bevorzugt größer 2, vorzugsweise zwischen 2 und 3,5, gewählt. Das Verhältnis W2/W1 der maximalen axialen Weite W2 zur minimalen Weite W1 der Zwischenräume 5 und 15 ist bevorzugt größer 1,4, vorzugsweise zwischen 1,5 und 2,8, gewählt. Diese Verhältnisse B1/B2 oder W2/W1 sind ein Maß für die relative Abnahme oder Zunahme der axialen Breite der Behandlungselemente oder der axialen Weite der Zwischenräume zwischen den Behandlungselementen und bestimmen somit auch den Grad der Kompression (oder ggf. Dekompression) des Schlamm-Flockmittel-Gemisches S+F.

Schließlich ist es in einer weiteren nicht dargestellten Ausführungsform auch möglich, die Breite der Behandlungselemente 4 und 14 oder die Weite der Zwischenräume nicht zu variieren also in Rotationsrichtung T konstant zu halten.

In einer weiteren, nicht dargestellten Ausführungsform können die Zwischenräume 5 und 15 auch radial nach außen abgeschlossen sein, um ein Herausdrängen des Schlamm-Flockmittel-Gemisches S+F aufgrund der Zentrifugalkräfte zu verhindern. Beispielsweise kann über die kammartige Struktur jeder Reihe von Behandlungselementen 4 und 14 außen ein axial zur Rotationsachse R verlaufendes balken- oder stabförmiges Längsteil angeordnet werden, das alle Zwischenräume 5 und 15 verschließt. Es entsteht dadurch eine leiterartige Struktur anstelle einer kammartigen Struktur. Auch das Längsteil kann wieder Behandlungskanten, insbesondere axial verlaufende Behandlungskanten an der Außenseite, aufweisen und insbesondere als Vierkant oder Vierkantrohr ausgebildet sein, das von außen auf die Außenflächen der Behandlungselemente aufgebracht wird, beispielsweise durch Schweißen.

Ferner kann in allen Ausführungsformen eine Reversierfunktion oder ein Reversierbetrieb zum Reinigen der Zwischenräume 5 und 15 vorgesehen sein, bei dem der Rotor in entgegen gesetzter Richtung zur im Mischbetrieb vorgesehenen Rotationsrichtung T gedreht wird, vor allem um größere Partikel aus den Zwischenräumen zu entfernen.

Die Behandlungskanten 41 bis 44 sind bevorzugt scharfkantig ausgebildet, um eine gute Verwirbelung zu erreichen. Die Oberfläche des Behandlungsrotors 1 kann in einer weiteren Ausführungsform zumindest an den Behandlungskanten mit einer Verschleißschutzschicht z.B. einer durch Plasma-Nitrieren hergestellten Schicht oder einer Keramikbeschichtung, insbesondere eine Aluminiumoxidschicht, beispielsweise durch Aufspritzen, oder auch einer Hartstoffschicht z.B. einer TiN- oder TiCN-Schicht versehen sein.

Die Behandlungselemente 4 und 14 können einstückig miteinander und/oder mit dem Grundkörper verbunden sein oder auch als vorgefertigte Teile in Öffnungen in dem Grundkörper eingesteckt und in den Innenraum eingeführt werden und dann mittels Schrauben und/oder Querstiften befestigt werden.

Gemäß FIG 7 und 8 ist zum Rotieren des Behandlungsrotors 1 in der Speiseleitung 9 dieser, z. B. kraftschlüssig, über das Kopplungselement 3 mit einem Motor 10 gekoppelt. Im Betrieb wird Schlamm S durch die Speiseleitung 9 gepumpt oder geführt, während der Behandlungsrotor 1 vom Motor 10 rotiert wird. Gleichzeitig wird durch den Behandlungsrotor 1 Flockmittel zugeführt. Dabei ist der Behandlungsrotor 1 vorzugsweise vollständig von Schlamm S umgeben, was hinsichtlich der Behandlungseffizienz besonders vorteilhaft ist.

Vorteilhaft ist es, wenn die von dem Behandlungsrotor 1 beanspruchte Querschnittesfläche, die insbesondere im dargestellten Ausführungsbeispiel dem Produkt L5 · L6 entspricht, größer als 50 % und kleiner als 74 % der Strömungsquerschnittsfläche des Speiseleitungsabschnitts der Speiseleitung 9 ist, in welchem der Behandlungsrotor 1 angeordnet ist.

Im Bereich des Kopplungselements 3 können auch Dichtelemente vorgesehen werden, um das Kopplungselement 3 gegenüber der Speiseleitung 9 gegen Durchtritt von Schlamm S oder Flüssigkeit abzudichten. Eine Kontrolleinheit für den Motor 10 und die nicht dargestellte(n) Förderpumpe(n) für das Flockmittel F und vorzugsweise auch den Schlamm S ist mit 11 bezeichnet. Die Drehzahl des Behandlungsrotors 1 kann vorteilhafterweise zwischen 1200 und 4000 U/min. gewählt werden, der Schlammvolumenstrom in der Speiseleitung 9 kann typischerweise von 3 bis 400 m³ pro Stunde betragen.

Die in FIG 7 und 8 dargestellte Vorrichtung kann weitere, dem gezeigten Behandlungsrotor 1 vor- oder nachgeschaltete oder auch parallel geschaltete Behandlungsrotoren 1 aufweisen, die analog zu der oben beschriebenen Art und Weise in die Speiseleitung 9 eingebunden sein können. Der Vorrichtung 7 kann in Strömungsrichtung bzw. Transportrichtung des Schlamms S des weiteren eine nicht gezeigte mechanische Trocknungseinrichtung, insbesondere eine Filterpresse oder eine Zentrifuge, zum Trocknen oder Entwässern des Schlamms S nachgeordnet sein, wobei das Flockmittel F weitgehend in dem abgetrennten Wasser oder Flüssigkeit verbleibt .

Die in FIG 7 und 8 dargestellte Vorrichtung kann auch weitere, dem gezeigten Behandlungsrotor 1 vor- oder nachgeschaltete oder auch parallel geschaltete Behandlunsgrotoren 1 aufweisen, die analog zu der oben beschriebenen Art und Weise in die Speiseleitung 9 eingebunden sein können.

Beim Desintegrieren von Schlamm S ist das Schlamm-Flockmittel-Gemisch S+F wie beschrieben durch den Schlamm S zu ersetzen, die Betriebsweise und Ausbildung des Behandlungsrotors 1 kann im Wesentlichen gleich bleiben. Auch die Desintegrationswirkung wird durch die Gestaltung des Behandlungsrotors gemäß der Erfindung, insbesondere die beschriebenen Verwirbelungs- und Kompressions- und Dekompressionseffekte, analog wie die Einmischwirkung stark verbessert. Die Durchbrüche 6 können hier zum Durchtritt von Schlamm S dienen oder auch ganz entfallen.

### Bezugszeichenliste

- 1: Behandlungsrotor
- 2: Rotorgrundkörper
- 3: Kopplungselement
- 4: Behandlungselement
- 5: Zwischenraum
- 6: Durchbruch
- 7: Behandlungselement
- 8: Befestigungselement
- 9: Transport- bzw. Speiseleitung
- 10: Motor
- 11: Kontrolleinheit
- 14: Behandlungselement
- 15: Zwischenraum
- 17: Behandlungselement
- 18: Befestigungselement
- 20: Innenraum
- 21: Wandung
- 41 bis 44: Behandlungskante
- 45, 46: Seitenwand
- 47, 48: Flachseite
- 49: Außenfläche
- 50: Begrenzungswand
- 51: Eintrittsöffnung
- 52: Austrittsöffnung
- 53: Auslassöffnungen
- R: Rotationsachse
- T: Rotationsrichtung
- B1: erste axiale Breite
- B2: zweite axiale Breite
- D: Innendurchmesser
- L1 bis L8: Abmessung
- F: Flockmittel
- S: Schlamm

## Patentansprüche

1. Vorrichtung zum Behandeln von Schlämmen, insbesondere biogenen oder industriellen Schlämmen,
umfassend
- zumindest einen im Schlamm anordenbaren, um eine Rotationsachse (R) rotierenden oder rotierbaren Behandlungsrotor (1)
- mit von der Rotationsachse (R) gesehen nach außen vorspringenden Behandlungselementen (4), zwischen denen Zwischenräume (5) gebildet sind,
- wobei wenigstens ein Teil der Behandlungselemente (4) an wenigstens einem, vorzugsweise jedem, angrenzenden Zwischenraum jeweils wenigstens eine Behandlungskante (41, 42, 43, 44) aufweisen, wobei jede dieser Behandlungskanten (41, 42, 43, 44) von der Rotationsachse gesehen von innen nach außen verläuft,
- **dadurch gekennzeichnet, dass** die in Richtung parallel zur Rotationsachse (R) gemessene Breite (B1, B2) wenigstens eines Teils der Behandlungselemente (4) in Rotationsrichtung (T) zunächst ab und dann wieder zunimmt, und wobei die in Richtung parallel zur Rotationsachse (R) gemessene Innenabmessung (W1, W2) wenigstens eines Teils der Zwischenräume (5, 15) zwischen den Behandlungselementen (4) in Rotationsrichtung (T) zunächst zu und dann wieder abnimmt.

2. Vorrichtung nach Anspruch 1, geeignet und bestimmt zum Einmischen von Konditioniermittel, insbesondere Flockmittel, in die Schlämme, wobei der Behandlungsrotor (1) als Einmischrotor ausgebildet ist und die Behandlungselemente (4) des Behandlungsrotors als Einmischelemente ausgebildet sind und jede Behandlungskante (41, 42, 43, 44) als Einmischkante ausgebildet ist.

3. Vorrichtung nach Anspruch 1 oder Anspruch 2, geeignet und bestimmt zur Desintegration der Schlämme, wobei der Behandlungsrotor (1) als Desintegrationsrotor ausgebildet ist und die Behandlungselemente (4) des Behandlungsrotors als Desintegrationselemente ausgebildet sind und jede Behandlungskante (41, 42, 43, 44) als Desintegrationskante ausgebildet ist.

4. Vorrichtung nach einem der vorhergehenden Ansprüche mit wenigstens einem oder einer beliebigen Kombination aus zwei oder mehr der folgenden Merkmale:
- die in Richtung parallel zur Rotationsachse (R) gemessene Breite (B1, B2) wenigstens eines Teils der Behandlungselemente (4) nimmt in Rotationsrichtung (T) zunächst ab und dann wieder zu, derart, dass die die Behandlungselemente (4) eine konkav gekrümmte, vorzugsweise bikonkav gekrümmte, Gestalt haben
- die in Richtung parallel zur Rotationsachse (R) gemessene Innenabmessung (W1, W2) wenigstens eines Teils der Zwischenräume (5, 15) zwischen den Behandlungselementen (4) nimmt in Rotationsrichtung (T) zunächst zu und dann wieder ab, derart, dass die Zwischenräume (5, 15) jeweils konvex gekrümmt, vorzugsweise bikonvex gekrümmt, ausgebildet sind.

5. Vorrichtung nach einem der vorhergehenden Ansprüche mit wenigstens einem der folgenden Merkmale:
- das Verhältnis einer maximalen Breite (B1) zu einer minimalen Breite (B2) der Behandlungselemente (4, 14) ist größer 2, vorzugsweise zwischen 2 und 3,5, gewählt,
- das Verhältnis einer maximalen Weite (W2) zu einer minimalen Weite (W1) der Zwischenräume (5, 15) ist größer 1,4, vorzugsweise zwischen 1,5 und 2,8, gewählt.

6. Vorrichtung nach einem der vorhergehenden Ansprüche, wobei wenigstens ein Teil der Behandlungselemente (4) an wenigstens einem, vorzugsweise jedem, angrenzenden Zwischenraum jeweils wenigstens zwei voneinander beabstandete Behandlungskanten (41, 42, 43, 44) aufweisen, wobei jede dieser Behandlungskanten (41, 42, 43, 44) von der Rotationsachse gesehen von innen nach außen verläuft.

7. Vorrichtung nach einem der vorhergehenden Ansprüche mit wenigstens einem oder einer beliebigen Kombination aus zwei oder mehr der folgenden Merkmale:
- die Behandlungskanten (41, 42, 43, 44) sind an Eintrittsöffnungen (51) oder Austrittsöffnungen (52) für Schlamm (S) oder für ein, Gemisch (S+F) aus Schlamm (S) und Flockmittel (F) bildenden Randbereichen der Zwischenräume (5, 15) angeordnet,
- wenigstens zwei Behandlungskanten (41 und 43, 42 und 44) von zwei verschiedenen an denselben Zwischenraum (5) angrenzenden Behandlungselementen (4) liegen einander gegenüber, insbesondere zwei Behandlungskanten (41 und 43) an einer Eintrittsöffnung (51) des Zwischenraumes (5) und zwei Behandlungskanten (42 und 44) an einer Austrittsöffnung (52) des Zwischenraumes (5),
- wenigstens zwei Behandlungskanten (41 und 43) eines Behandlungselementes (4, 14) sind durch eine Flachseite (47) des Behandlungselements (4, 14) verbunden, insbesondere zwei Behandlungskanten (41, 43) durch eine erste Flachseite (47) und zwei weitere Behandlungskanten (42, 44) durch eine weitere, vorzugsweise zur ersten Flachseite (47) parallele zweite Flachseite (48) des Behandlungselements (4, 14),
- gegenüberliegende Behandlungskanten (41 und 42,43 und 44) an den beiden Flachseiten (47, 48) sind über konkav gekrümmte Seitenwände (45, 46) miteinander verbunden, die seitliche Begrenzungswände der Zwischenräume (5, 15) bilden, wobei die Seitenwände (45, 46) insbesondere spiegelsymmetrisch bezüglich wenigstens einer Symmetrieebene ausgebildet sind, vorzugsweise einer in der Mitte zwischen den beiden Flachseiten (47, 48) liegenden und zu diesen parallelen Symmetrieebene und/oder einer in der Mitte zwischen zwei Behandlungskanten (41, 43) und zu den Flachseiten (47, 48) orthogonalen Symmetrieebene.
- eine die Endpunkte der Behandlungskanten (41, 44) verbindende Außenfläche (49) des Behandlungselements (4, 14) ist als Flachseite ausgebildet und/oder eine innere Begrenzungswand (50) des Zwischenraumes (5, 15) ist als Flachseite ausgebildet,
- die Länge (L4) der Behandlungselemente (4) oder deren Behandlungskanten (41 bis 44) ist, insbesondere vorzugsweise wenigstens um das 1,5fache bis 3fache, größer als die lichte Weite (L2) der Zwischenräume (5, 15).

8. Vorrichtung nach einem der vorhergehenden Ansprüche mit wenigstens einem oder einer beliebigen Kombination aus zwei oder mehr der folgenden Merkmale:
- der Behandlungsrotor (1) weist einen Rotorgrundkörper (2) auf, an dem die Behandlungselemente (4, 14) befestigt oder angeformt sind,
- der Rotorgrundkörper (2) ist innen hohl mit einem Innenraum (20), der von einer, vorzugsweise im Wesentlichen hohlzylindrischen, Wandung (21) umschlossen ist, und weist bevorzugt wenigstens einen Durchbruch (6) in der Wandung (21) auf,
- über den wenigstens einen Durchbruch (6) steht jeweils der Innenraum (20) des Rotorgrundkörpers (2) mit dem Außenraum in Strömungsverbindung, so dass in dem oder durch den Innenraum (20) strömendes Flockmittel (F) durch den wenigstens einen Durchbruch (6) in den im Außenraum befindlichen Schlamm (S) einbringbar ist oder eingebracht werden kann,
- wenigstens ein Durchbruch (6) ist als im Wesentlichen parallel zur Rotationsachse (R) verlaufende axialer Schlitz ausgebildet,
- der oder die Durchbrüche (6) sind in Umfangsrichtung oder Rotationsrichtung (T) gesehen zwischen Behandlungselementen (4, 14) angeordnet und/oder zwischen jeweils zwei Behandlungselementen (4, 14) ist in Umfangsrichtung oder Rotationsrichtung (T) gesehen jeweils wenigstens ein Durchbruch (6) angeordnet,
- die Durchbrüche (6) sind zueinander in Umfangsrichtung oder Rotationsrichtung (T) versetzt, vorzugsweise äquidistant verteilt, insbesondere paarweise zueinander um etwa 180° versetzt und/oder zu den Behandlungselementen (4, 14) jeweils um etwa 90° versetzt,
- der Behandlungsrotor (1) weist ein sich an den Rotorgrundkörper (2) axial zur Rotationsachse (R) anschließendes Kopplungselement (3) auf, über welches der Behandlungsrotor (1) mit einem Rotationsantrieb (10), insbesondere einer Drehwelle des Rotationsantriebs (10), gekoppelt werden kann zum Rotieren des Behandlungsrotors (1) um die Rotationsachse (R).

9. Vorrichtung nach einem der vorhergehenden Ansprüche mit wenigstens einem oder einer beliebigen Kombination aus zwei oder mehr der folgenden Merkmale:
- mehrere Behandlungselemente (4) des Behandlungsrotors (1) sind in Richtung parallel zur Rotationsachse (R) versetzt angeordnet, vorzugsweise in wenigstens einer Reihe, vorzugsweise in zumindest zwei Reihen, wobei vorzugsweise die oder jede Reihe parallel zur Rotationsachse (R) oder helikal um die Rotationsachse (R) verläuft,
- wenigstens zwei Behandlungselemente (4) sind auf einem Kreis um die Rotationsachse (R) oder bei der gleichen axialen Position entlang der Rotationsachse (R) angeordnet und zueinander um einen Abstandwinkel versetzt, wobei vorzugsweise diese wenigstens zwei Behandlungselemente in paarweise rotationssymmetrischer Anordnung oder unter gleichen Abstandswinkeln zueinander angeordnet sind und/oder wobei die Reihen von mehreren Behandlungselementen unter gleichen Abstandswinkeln zueinander oder unter einer drehzähligen Symmetrie angeordnet sind,
- wenigstens ein Teil der, vorzugsweise alle, Behandlungselemente (4), sind an der von der Rotationsachse (R) abgewandten Außenseite voneinander beabstandet und/oder die Zwischenräume (5) zwischen diesen Behandlungselementen sind an ihrer von der Rotationsachse (R) abgewandten Außenseite nach außen offen,
- der Massenschwerpunkt des Rotors liegt auf der Rotationsachse und/oder die Rotationsachse bildet eine Hauptträgheitsachse des Rotors.

10. Vorrichtung nach einem der vorhergehenden Ansprüche mit wenigstens einem oder einer beliebigen Kombination aus zwei oder mehr der folgenden Merkmale:
- der Verlauf der Behandlungskanten ist so gewählt, dass der Abstand der Punkte auf der Behandlungskante von der Rotationsachse entlang des Verlaufs der Behandlungskante stetig, vorzugsweise streng monoton, zunimmt,
- der Verlauf der Behandlungskanten ist radial oder gekrümmt oder linear und schräg zur radialen Richtung.

11. Verfahren zum Einmischen von Konditioniermittel, insbesondere Flockmittel (F), in einen Schlamm (S), wobei eine Vorrichtung nach Anspruch 2 oder einem der auf Anspruch 2 rückbezogenen Ansprüche verwendet wird und der Einmischrotor (1) im Wesentlichen vollständig, zumindest jedoch mit seinen Einmischelementen (4), mit dem Schlamm umgeben wird oder im Schlamm angeordnet oder eingetaucht wird, wobei vorzugsweise das dem Schlamm zugesetzte Konditioniermittel, insbesondere Flockmittel, die Trennung der Flüssigphase oder Flüssigkeit, insbesondere Wasser, von Feststoffen, einschließlich Festanteilen von im Schlamm enthaltenen Zellen organischen Ursprungs, des Schlammes fördert oder verstärkt und/oder bei dem aus Feststoffteilchen und/oder festen Zellbestandteilen des Schlammes und Flockmittel Flockengebilde verschiedener Größe gebildet werden und Flüssigkeit, insbesondere Wasser, des Schlammes freigesetzt wird.

12. Verfahren zur Desintegration von Schlämmen (S), wobei eine Vorrichtung nach Anspruch 3 oder einem der auf Anspruch 3 rückbezogenen Ansprüche verwendet wird und deren Behandlungsrotor (1) im Wesentlichen vollständig, zumindest jedoch mit seinen Behandlungselementen (4), mit dem Schlamm umgeben wird oder im Schlamm angeordnet oder eingetaucht wird und um seine Rotationsachse (A) rotiert wird.

## Claims

1. Apparatus for treating slurries, in particular biogenic or industrial slurries,
comprising
- at least one treatment rotor (1) which can be arranged in the slurry and which rotates or is rotatable about an axis of rotation (R),
- with treatment elements (4) which project outward, as seen from the axis of rotation (R), and between which interspaces (5) are formed,
- at least some of the treatment elements (4) having, at at least one, preferably each, adjacent interspace, in each case at least one treatment edge (41, 42, 43, 44), each of these treatment edges (41, 42, 43, 44) running from the inside outward, as seen from the axis of rotation,
- **characterized in that** the width (B1, B2), measured in the direction parallel to the axis of rotation (R), of at least some of the treatment elements (4) first decreases in the direction of rotation (T) and then increases again, and the internal dimension (W1, W2), measured in the direction parallel to the axis of rotation (R), of at least some of the interspaces (5, 15) between the treatment elements (4) first increasing in the direction of rotation (T) and then decreasing again.

2. Apparatus according to Claim 1, suitable and intended for mixing conditioning agent, in particular flocculent, into the slurries, the treatment rotor (1) being designed as a mixing-in rotor and the treatment elements (4) of the treatment rotor being designed as mixing-in elements and each treatment edge (41, 42, 43, 44) being designed as a mixing-in edge.

3. Apparatus according to Claim 1 or Claim 2, suitable and intended for the disintegration of the slurries, the treatment rotor (1) being designed as a disintegration rotor and the treatment elements (4) of the treatment rotor being designed as disintegration elements and each treatment edge (41, 42, 43, 44) being designed as a disintegration edge.

4. Apparatus according to one of the preceding claims, with at least one or with any combination of two or more of the following features:
- the width (B1, B2), measured in the direction parallel to the axis of rotation (R), of at least some of the treatment elements (4) first decreases in the direction of rotation (T) and then increases again, in such a way that the treatment elements (4) have a concavely curved, preferably biconcavely curved configuration,
- the internal dimension (W1, W2), measured in the direction parallel to the axis of rotation (R), of at least some of the interspaces (5, 15) between the treatment elements (4) first increases in the direction of rotation (T) and then decreases again, in such a way that the interspaces (5, 15) are in each case of convexly curved, preferably biconvexly curved form.

5. Apparatus according to one of the preceding claims, with at least one of the following features:
- the selected ratio of a maximum width (B1) to a minimum width (B2) of the treatment elements (4, 14) is greater than 2, preferably between 2 and 3.5,
- the selected ratio of a maximum width (W2) to a minimum width (W1) of the interspaces (5, 15) is greater than 1.4, preferably between 1.5 and 2.8.

6. Apparatus according to one of the preceding claims, at least some of the treatment elements (4) having, at at least one, preferably each, adjacent interspace, in each case at least two treatment edges (41, 42, 43, 44) spaced apart from one another, each of these treatment edges (41, 42, 43, 44) running from the inside outward, as seen from the axis of rotation.

7. Apparatus according to one of the preceding claims, with at least one or any combination of two or more of the following features:
- the treatment edges (41, 42, 43, 44) are arranged at marginal regions of the interspaces (5, 15), which marginal regions form inlet orifices (51) or outlet orifices (52) for slurry (S) or for a mixture (S+F) of slurry (S) and of flocculent (F),
- at least two treatment edges (41 and 43, 42 and 44) of two different treatment elements (4) adjacent to the same interspace (5) lie opposite one another, in particular two treatment edges (41 and 43) at an inlet orifice (51) of the interspace (5) and two treatment edges (42 and 44) at an outlet orifice (52) of the interspace (5),
- at least two treatment edges (41 and 43) of a treatment element (4, 14) are connected by means of a flat side (47) of the treatment element (4, 14), in particular two treatment edges (41, 43) by means of a first flat side (47) and two further treatment edges (42, 44) by means of a further second flat side (48), preferably parallel to the first flat side (47), of the treatment element (4, 14),
- opposite treatment edges (41 and 42, 43 and 44) on the two flat sides (47, 48) are connected to one another via concavely curved side walls (45, 46) which form lateral boundary walls of the interspaces (5, 15), the side walls (45, 46) being designed, in particular, to be mirror-symmetrical with respect to at least one plane of symmetry, preferably a plane of symmetry lying in the middle between the two flat sides (47, 48) and parallel to these and/or a plane of symmetry lying in the middle between two treatment edges (41, 43) and orthogonal to the flat sides (47, 48),
- an outer face (49), connecting the end points of the treatment edges (41, 44), of the treatment element (4, 14) is designed as a flat side and/or an inner boundary wall (50) of the interspace (5, 15) is designed as a flat side,
- the length (L4) of the treatment elements (4) or of their treatment edges (41 to 44) is, in particular, preferably at least 1.5 times to 3 times larger than the clear width (L2) of the interspaces (5, 15).

8. Apparatus according to one of the preceding claims, with at least one or any combination of two or more of the following features:
- the treatment rotor (1) has a rotor basic body (2) on which the treatment elements (4, 14) are fastened or integrally formed,
- the rotor basic body (2) is internally hollow with an inner space (20), which is enclosed by a preferably essentially hollow-cylindrical wall (21), and preferably has at least one perforation (6) in the wall (21),
- in each case the inner space (20) of the rotor basic body (2) is flow-connected to the outside space via the at least one perforation (6), so that flocculent (F) flowing in or through the inner space (20) is introducible or can be introduced through the at least one perforation (6) into the slurry (S) located in the outside space,
- at least one perforation (6) is designed as an axial slot running essentially parallel to the axis of rotation (R),
- the perforation or perforations (6) is or are arranged between treatment elements (4, 14), as seen in the circumferential direction or direction of rotation (T), and/or in each case at least one perforation (6) is arranged in each case between two treatment elements (4, 14), as seen in the circumferential direction or direction of rotation (T),
- the perforations (6) are offset to one another in the circumferential direction or direction of rotation (T), preferably distributed equidistantly, in particular offset in pairs to one another by about 180° and/or offset to the treatment elements (4, 14) in each case by about 90°,
- the treatment rotor (1) has a coupling element (3) which adjoins the rotor basic body (2) axially with respect to the axis of rotation (R) and via which the treatment rotor (1) can be coupled to a rotary drive (10), in particular a rotary shaft of the rotary drive (10), for the purpose of rotating the treatment rotor (1) about the axis of rotation (R).

9. Apparatus according to one of the preceding claims, with at least one or any combination of two or more of the following features:
- a plurality of treatment elements (4) of the treatment rotor (1) are arranged so as to be offset in a direction parallel to the axis of rotation (R), preferably in at least one row, preferably in at least two rows, preferably the or each row running parallel to the axis of rotation (R) or helically about the axis of rotation (R),
- at least two treatment elements (4) are arranged on a circle about the axis of rotation (R) or in the same axial position along the axis of rotation (R) and are offset to one another by a spacing angle, preferably these at least two treatment elements being arranged in a paired rotationally symmetrical arrangement or at identical spacing angles to one another and/or the rows of pluralities of treatment elements being arranged at equal spacing angles to one another or with rotational-speed symmetry,
- at least some, preferably all, of the treatment elements (4) are spaced apart from one another on the outside facing away from the axis of rotation (R) and/or the interspaces (5) between these treatment elements are open outward on their outside facing away from the axis of rotation (R),
- the mass center of gravity of the rotor lies on the axis of rotation and/or the axis of rotation forms a main axis of inertia of the rotor.

10. Apparatus according to one of the preceding claims, with at least one or any combination of two or more of the following features:
- the run of the treatment edges is selected such that the spacing of the points on the treatment edge from the axis of rotation increases along the run of the treatment edge continuously, preferably strictly monotonically,
- the run of the treatment edges is radial or curved or linear and oblique with respect to the radial direction.

11. Method for mixing conditioning agent, in particular flocculent (F), into a slurry (S), an apparatus according to Claim 2 or one of the claims referring back to Claim 2 being used, and the mixing-in rotor (1) being surrounded essentially completely, but at least with its mixing-in elements (4), by the slurry or being arranged or dipped in the slurry, preferably the conditioning agent, in particular flocculent, added to the slurry promoting or intensifying the separation of the liquid phase or liquid, in particular water, from solids, including solid fractions of cells of organic origin contained in the slurry, of the slurry, and/or in which flaky structures of different size are formed from solid particles and/or solid cellular constituents of the slurry and flocculent and liquid, in particular water, is released from the slurry.

12. Method for the disintegration of slurries (S), an apparatus according to Claim 3 or one of the claims referring back to Claim 3 being used and its treatment rotor (1) being surrounded essentially completely, but at least with its treatment elements (4), by the slurry or being arranged or dipped in the slurry and being rotated about its axis of rotation (A).

## Revendications

1. Dispositif de traitement de boues, notamment de boues biogènes ou industrielles, comprenant
- au moins un rotor de traitement (1) adapté pour être disposé dans la boue et étant en rotation ou pouvant être mis en rotation autour d'un axe de rotation (R),
- avec des éléments de traitement (4) en saillie vers l'extérieur, vu de l'axe de rotation (R), entre lesquels des espaces intermédiaires (5) sont formés,
- au moins une partie des éléments de traitement (4) étant pourvus en regard d'au moins un des espaces intermédiaires, de préférence en regard de chacun des espaces intermédiaires, d'un bord de traitement (41, 42, 43, 44), chacun desdits bords de traitement (41, 42, 43, 44) s'étendant, vu de l'axe de rotation, de l'intérieur vers l'extérieur,
**caractérisé en ce que** la largeur (B1, B2) d'au moins une partie des éléments de traitement (4), mesurée dans le sens parallèle à l'axe de rotation (R), diminue d'abord dans le sens de la rotation (T), puis augmente, et la dimension intérieure (W1, W2) d'au moins une partie des espaces intermédiaires (5, 15) entre les éléments de traitement (4), mesurée dans le sens parallèle de l'axe de rotation (R), augmentant d'abord dans le sens de la rotation (T) puis diminuant.

2. Dispositif selon la revendication 1, apte et destiné à mélanger avec la boue une matière de conditionnement, notamment une matière de floculation, le rotor de traitement (1) étant configuré comme rotor mélangeur, et les éléments de traitement (4) du rotor de traitement étant configurés comme des éléments mélangeurs et chaque bord de traitement (41, 42, 43, 44) étant configuré comme bord mélangeur.

3. Dispositif selon la revendication 1 ou la revendication 2, apte et destiné à la désintégration des boues, le rotor de traitement (1) étant configuré comme rotor de désintégration et les éléments de traitement (4) du rotor de traitement étant configurés comme éléments de désintégration et chaque bord de traitement (41, 42, 43, 44) étant configuré comme bord de désintégration.

4. Dispositif selon l'une des revendications précédentes, ayant au moins une ou une combinaison quelconque de deux ou plusieurs des caractéristiques suivantes:
- la largeur (B1, B2) d'au moins une partie des éléments de traitement (4), mesurée dans le sens parallèle à l'axe de rotation (R), diminue d'abord dans le sens de la rotation (T), puis augmente, de façon que les éléments de traitement (4) aient une forme courbée concave, de préférence courbée biconcave,
- la dimension intérieure (W1, W2) d'au moins une partie des espaces intermédiaires (5, 15) entre les éléments de traitement (4), mesurée dans le sens parallèle à l'axe de rotation (R) augmente d'abord dans le sens de la rotation (T) puis diminue, de façon que les espaces intermédiaires (5, 15) soient courbés convexe, de préférence courbés biconvexe.

5. Dispositif selon l'une des revendications précédentes, ayant au moins une des caractéristiques suivantes:
- le rapport d'une largeur maximale (B1) à une largeur minimale (B2) des éléments de traitement (4, 14) est choisi supérieur à 2, de préférence entre 2 et 3,5,
- le rapport entre une largeur maximale (W1) et une largeur minimale (W2) des espaces intermédiaires (5, 15) est choisi supérieur à 1,4, de préférence entre 1,5 et 2,8.

6. Dispositif selon l'une des revendications précédentes, au moins une partie des éléments de traitement (4) étant pourvus en regard d'au moins un des espaces intermédiaires, de préférence en regard de chacun des espaces intermédiaires, d'un bord de traitement (41, 42, 43, 44), chacun de ces bords de traitement (41, 42, 4 3, 44) s'étendant, vu de l'axe de rotation, de l'intérieur vers l'extérieur.

7. Dispositif selon l'une des revendications précédentes, ayant au moins une ou une combinaison quelconque de deux ou plusieurs des caractéristiques suivantes:
- les bords de traitement (41, 42, 43, 44) sont disposés à des zones de bord des espaces intermédiaires (5, 15) formant des ouvertures d'entrée (51) ou des ouvertures de sorties (52) pour de la boue (S) ou pour un mélange (S+F) de boue (S) et de matière de floculation (F),
- au moins deux bords de traitement (41 et 43, 42 et 44) de deux éléments de traitement (4) différents limitrophes du même espace intermédiaire (5) sont disposés en regard l'un de l'autre, notamment deux bords de traitement (41 et 43) à une ouverture d'entrée (51) de l'espace intermédiaire (5) et deux bords de traitement (42 et 44) à une ouverture de sortie (52) de l'espace de traitement (5),
- au moins deux bords de traitement (41 et 43) d'un élément de traitement (4, 14) sont reliés par une face plate (47) de l'élément de traitement (4, 14), notamment deux bords de traitement (41, 43) par une première face plate (47) et deux autres bords de traitement (42, 44) par une autre face plate (48) de l'élément de traitement (4, 14) qui est de préférence parallèle à la première face plate (47),
- des bords de traitement en regard l'un de l'autre (41 et 42, 43 et 44) aux deux faces plates (47, 48) sont reliés l'un à l'autre par des parois latérales (45, 46) courbés concaves formant des parois de limitation latérales des espaces intermédiaires (5, 15), les parois latérales (45, 46) étant notamment formées symétriquement par rapport à un plan de symétrie, de préférence par rapport à un plan de symétrie situé au milieu entre les deux faces plates (47, 48) et parallèle à celles-ci et/ou à un plan de symétrie situé au milieu entre deux bords de traitement (41, 43) et perpendiculaire aux faces plates (47, 48),
- une face extérieure (49) de l'élément de traitement (4, 14) reliant les points d'extrémité des bords de traitement (41, 44) est formée comme face plate et/ou une paroi de limitation intérieure (50) de l'espace intermédiaire (5, 15) est formée comme face plate,
- la longueur (L4) des éléments de traitement (4) ou de leurs bords de traitement (41 à 44) est, notamment de préférence, plus grande de 1,5 à 3 fois la largeur intérieure (L2) des espaces intermédiaires (5, 15).

8. Dispositif selon l'une des revendications précédentes, ayant au moins une ou une combinaison quelconque de deux ou plusieurs des caractéristiques suivantes:
- le rotor de traitement (1) comporte un corps de base de rotor (2) auquel les éléments de traitement (4) sont fixés ou formés de matière,
- le corps de base de rotor (2) est creux à l'intérieur avec un espace intérieur (20) entouré d'une paroi (21) qui est préférence essentiellement cylindriques creuse et comporte de préférence au moins un passage (6) dans la paroi (21),
- par le ou les passages (6), l'espace intérieur (20) du corps de base de rotor (2) est relié par une liaison de flux à l'espace extérieur, de façon que de la matière de floculation (F) s'écoulant dans ou à travers l'espace intérieur (20) peut s'introduire ou être introduite par le ou les passages (6) dans la boue (S) présente dans l'espace extérieur,
- au moins un passage (6) est formé comme fente axiale s'étendant sensiblement parallèle à l'axe de rotation (R),
- le ou les passages (6) sont disposés, vu dans le sens périphérique ou dans le sens de la rotation (T), entre des éléments de traitement (4, 14) et/ou au moins un passage (6) est disposé chaque fois entre deux éléments de traitement (4, 14), vu dans le sens périphérique ou dans le sens de la rotation (R),
- les passages (6) sont décalés les uns par rapport aux autres dans le sens périphérique ou dans le sens de la rotation (T), de préférence répartis de façon équidistante, notamment décalés par paires d'environ 180° et/ou décalés par rapport aux éléments de traitement (4, 14) de 90°,
- le rotor de traitement (1) comporte un élément d'accouplement (3) adjacent au corps de base de rotor (2) axialement par rapport à l'axe de rotation (R), par lequel le rotor de traitement (1) peut être relié à un entraînement en rotation (10), notamment un arbre de rotation de l'entraînement en rotation, pour faire tourner le rotor de traitement (1) autour de l'axe de rotation (R).

9. Dispositif selon l'une des revendications précédentes, ayant au moins une ou une combinaison quelconque de deux ou plusieurs des caractéristiques suivantes:
- plusieurs éléments de traitement (4) du rotor de traitement (1) sont disposés décalés parallèlement à l'axe de rotation (R), de préférence en au moins une rangée, de préférence en au moins deux rangées, la ou chaque rangée s'étendant parallèlement à l'axe de rotation (R) ou de façon hélicoïdale autour de l'axe de rotation (R),
- au moins deux éléments de traitement (4) sont disposés sur un cercle autour de l'axe de rotation (R) ou, à position axiale égale, disposés le long de l'axe de rotation (R) et décalés l'un par rapport à l'autre d'un angle de distance, de préférence ces deux éléments de traitement étant disposés par paire en disposition symétrique de rotation ou étant disposés l'un de l'autre à des angles de distance égaux et/ou les rangées de plusieurs éléments de traitement étant disposées à des angles de distance égaux ou sous une symétrie de rotation,
- au moins une partie des éléments de traitement (4), de préférence tous, sont espacés les uns des autres sur la face extérieure opposée à l'axe de rotation (R) et/ou les espaces intermédiaires (5) entre ces éléments de traitement sont ouverts vers l'extérieur sur la face extérieure opposée à l'axe de rotation (R),
- le centre de gravité du rotor est situé sur l'axe de rotation et/ou l'axe de rotation forme un axe principal d'inertie du rotor.

10. Dispositif selon l'une des revendications précédentes, ayant au moins une ou une combinaison quelconque de deux ou plusieurs des caractéristiques suivantes:
- l'évolution des bords de traitement est choisie de façon que la distance des points, sur le bord de traitement, de l'axe de rotation le long l'évolution du bord de traitement augmente de manière régulière, de préférence de manière strictement monotone,
- l'évolution du bord de traitement est radiale ou courbée ou linéaire ou en biais par rapport à la direction radiale.

11. Procédé d'introduction et de mélange d'une matière de conditionnement, notamment d'une matière de floculation (F), dans une boue (S), pour lequel un dispositif selon la revendication 2 ou selon l'une des revendications rattachées à la revendication 2 est utilisé et le rotor de mélange (1) est essentiellement entièrement, mais pour le moins sur ses éléments de mélange (4), entouré de la boue ou disposé ou plongé dans la boue, la matière de conditionnement ajoutée à la boue, notamment la matière de floculation, facilitant ou renforçant la séparation de la phase liquide ou du liquide, notamment de l'eau, des matières solides, y compris des parties solides de cellules d'origine organique présentes dans la boue et/ou des formations de flocons de différentes tailles étant formées à partir des particules solides et/ou des parties solides des cellules de la boue et de la matière de floculation et du liquide de la boue, notamment de l'eau, étant libéré.

12. Procédé de désintégration de boues (S), pour lequel un dispositif selon la revendication 3 ou selon l'une des revendications rattachées à la revendication 3 est utilisé et dont le rotor de traitement (1) est essentiellement entièrement, mais pour le moins sur ses éléments de mélange (4), entouré de la boue ou disposé ou plongé dans la boue et est fait tourner autour de son axe de rotation (R).
